(19) Europäisches Patentamt
European Patent Office
Office européen des brevets

(11) **EP 1 693 559 B1**

(12) **FASCICULE DE BREVET EUROPEEN**

(45) Date de publication et mention
de la délivrance du brevet:
**13.10.2010 Bulletin 2010/41**

(51) Int Cl.:
*F02D 35/02* *(2006.01)*    *F02B 1/12* *(2006.01)*

(21) Numéro de dépôt: **06290254.9**

(22) Date de dépôt: **14.02.2006**

(54) **Système de contrôle du fonctionnement d'un moteur Diesel équipé de moyens de recirculation de gaz d'échappement**

Steuerungssystem zum Betreiben eines Dieselmotors mit Abgasrückführung

Control system for operating a Diesel engine with exhaust gas recirculation means

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.02.2005 FR 0501714**

(43) Date de publication de la demande:
**23.08.2006 Bulletin 2006/34**

(73) Titulaire: **PEUGEOT CITROËN AUTOMOBILES S.A.**
**78140 Vélizy Villacoublay (FR)**

(72) Inventeurs:
• **Gimbres, David**
**94510 La Queue en Brie (FR)**
• **Duverger, Thierry**
**92350 Le Plessis Robinson (FR)**
• **Vermonet, Claire**
**75116 Paris (FR)**
• **Chaouche, Ali**
**75018 Paris (FR)**

(74) Mandataire: **Ménès, Catherine et al**
**Peugeot Citroën Automobiles SA**
**DRIA/PPIQ/BLE**
**18, rue des Fauvelles**
**92250 La Garenne Colombes (FR)**

(56) Documents cités:
AT-U1- 6 753        DE-A1- 10 319 333
FR-A- 2 835 881     FR-A- 2 852 355

**EP 1 693 559 B1**

**Description**

La présente invention concerne un système de contrôle du fonctionnement d'un moteur Diesel de véhicule automobile équipé de moyens de recirculation des gaz d'échappement en entrée de celui-ci.

Plus particulièrement, la présente invention concerne un système du type susmentionné comprenant des moyens de commande des moyens de recirculation et des moyens de détermination d'un niveau de bruit de combustion dans le moteur.

On connaît dans l'état de la technique des systèmes de contrôle du fonctionnement du moteur visant à minimiser le bruit de combustion perçu par le conducteur du véhicule.

De manière typique, ces systèmes déterminent un index de bruit de combustion en fonction de la pression dans les cylindres du moteur, par exemple un index IEPC pour « Index d'Energie de Pression de Combustion », et modifient des paramètres de l'injection de carburant dans les cylindres pour minimiser cet index et donc le bruit de combustion. Par exemple, dans les moteurs Diesel à injection classique, la réduction du bruit de combustion est assurée par des injections précoces de carburant dans les cylindres, ou injections pilotes.

Parallèlement à la recherche par les motoristes de la minimisation du bruit de combustion, les normes anti-pollution sont de plus en plus sévères, et il devient difficile à la fois de minimiser le bruit de combustion en modifiant l'injection de carburant dans le cylindre et d'assurer le niveau d'émission de polluants requis.

Par exemple, afin de satisfaire les normes anti-pollution, de nouveaux types de moteurs Diesel sont mis au point, tels que des moteurs à combustion homogène (HCCI) ou partiellement homogène (P/HCCI), par exemple décrits dans la demande de brevet FR 2 835 881. Or, pour de tels moteurs, le bruit de combustion est élevé et l'utilisation d'injections pilotes ne suffit plus pour minimiser le bruit de combustion de manière satisfaisante.

Le document AT-A-6753 décrit un système de contrôle du fonctionnement d'un moteur Diesel de véhicule automobile équipé de moyens de recirculation des gaz d'échappement en entrée de celui-ci, ledit système comprenant des moyens de commande des moyens de recirculation et des moyens de détermination d'un niveau de bruit de combustion dans le moteur.

Le but de l'invention est de résoudre le problème susmentionné en proposant un système de contrôle du fonctionnement de moteur apte à minimiser le bruit de combustion sans modifier les caractéristiques de l'injection de carburant dans les cylindres du moteur.

A cet effet, l'invention a pour objet un système de contrôle du fonctionnement d'un moteur Diesel de véhicule automobile équipé de moyens de recirculation des gaz d'échappement en entrée de celui-ci, ledit système comprenant des moyens de commande des moyens de recirculation et des moyens de détermination d'un niveau de bruit de combustion dans le moteur, les moyens de commande étant adaptés pour piloter les moyens de recirculation en fonction du niveau de bruit de combustion déterminé afin de minimiser le bruit de combustion dans le moteur ledit système comprenant une chaîne d'acquisition de la pression P dans au moins un cylindre du moteur, de l'angle moteur $\alpha$ et les moyens de détermination du niveau de bruit de combustion déterminant celui-ci en fonction d'un niveau de bruit dans le au moins un cylindre selon la relation :

$$nbc = \max_{\alpha \in A}\left(\frac{dP}{d\alpha}\right)$$

où nbc est le niveau de bruit de combustion et A est une plage prédéterminée d'angles vilebrequin du cycle du au moins un cylindre, lesdits moyens de commande comprenant des moyens formant cartographie de valeurs nominales prédéterminées du niveau de bruit de combustion en fonction de points de fonctionnement prédéterminés du moteur, et des moyens de pilotage adaptés pour délivrer aux moyens de recirculation un signal de régulation propre à réguler, pour un point de fonctionnement du moteur de la cartographie, le niveau de bruit de combustion sur la valeur du niveau de bruit de combustion de la cartographie associée à ce point de fonctionnement, caractérisé en ce que les moyens de commande comprennent des moyens de correction des moyens de pilotage adaptés pour déterminer le signal de régulation et corriger les moyens de pilotage en fonction de celui-ci, à partir d'une première stratégie selon les relations :

$$U^* = \underset{U \in Q, \alpha \in A}{\arg\min}\left(nbc(U)\right)$$

sous la contrainte :

$$\max\left(\frac{dP}{d\alpha}\right)_{nom} - T_{min} \le nbc(U) \le \max\left(\frac{dP}{d\alpha}\right)_{nom} + T_{max}$$

où U' est le signal de régulation, U est un vecteur de paramètres de fonctionnement des moyens de recirculation, Q est un ensemble prédéterminé de valeurs pour les Paramètres U, $\max\left(\frac{dP}{d\alpha}\right)_{nom}$ est une valeur nominale du niveau de bruit de combustion, et $T_{min}$ et $T_{max}$ sont des tolérances prédéterminées positives.

Suivant des modes particuliers de réalisation, le système comporte une ou plusieurs des caractéristiques suivantes :

- les moyens de recirculation comprennent des moyens de réglage du débit des gaz d'échappement recirculés en entrée du moteur, et les moyens de commande comprennent des moyens de pilotage des moyens de réglage du débit en fonction du niveau de bruit de combustion déterminé ;
- les moyens de recirculation comprennent des moyens de réglage de la température des gaz d'échappement recirculés en entrée du moteur, et les moyens de commande comprennent des moyens de pilotage des moyens de réglage de la température en fonction du niveau de bruit de combustion déterminé ;
- les moyens de correction sont adaptés, lorsque la première stratégie échoue, pour déterminer le signal de régulation, et corriger les moyens de pilotage en fonction de celui-ci, à partir d'une seconde stratégie selon les relations :

$$U^{*} = \arg\min_{U\in Q, \alpha\in A}\left(\left\|nbc(U) - \max\left(\frac{dP}{d\alpha}\right)_{nom}\right\|\right)$$

sous la contrainte :

$$nbc(U) \le \max\left(\frac{dP}{d\alpha}\right)_{nom}$$

- Q est un ensemble prédéterminé de valeurs des paramètres de fonctionnement des moyens de recirculation satisfaisant à des contraintes prédéterminées sur l'émission de polluant par le moteur ; et
- le moteur est du type à homogénéisation partielle ou totale du mélange carburant-gaz admis dans les cylindres du moteur.

L'invention sera mieux comprise à la lecture de la description qui va suivre, donnée uniquement à titre d'exemple, et faite en relation avec les dessins annexés, dans lesquels :

- la figure 1 est une vue schématique d'un système de contrôle conforme à l'invention associé à un moteur Diesel de véhicule automobile ;
- la figure 2 est une vue schématique de l'unité de contrôle entrant dans la constitution du système de la figure 1 ;
- la figure 3 est un organigramme d'un fonctionnement de l'unité de contrôle de la figure 2 illustrant la minimisation du bruit de combustion en fonction à la fois du débit et de la température des gaz d'échappement recirculés en entrée du moteur.

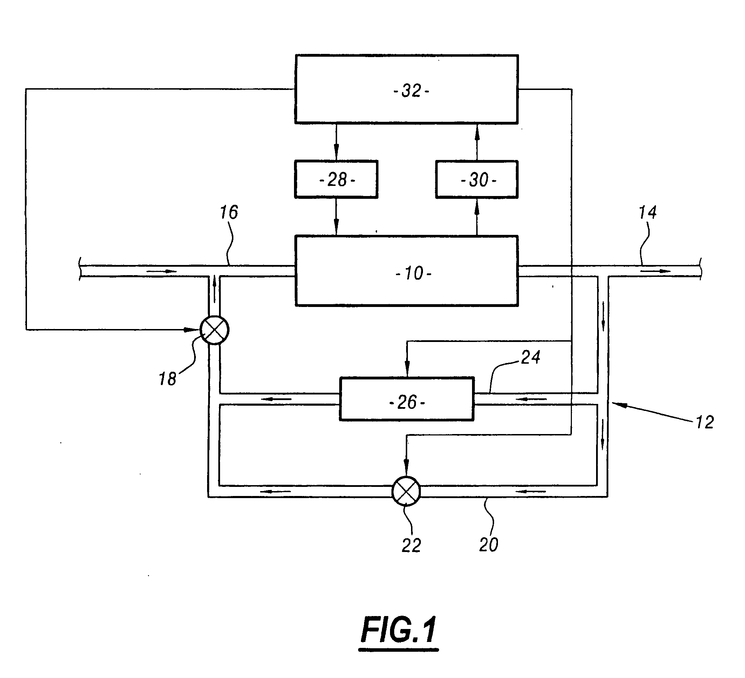

Sur la figure 1, un moteur Diesel 10, par exemple un moteur à combustion homogène (HCCI) ou partiellement homogène (P/HCCI), est équipé d'une boucle de recirculation 12 de gaz d'échappement en entrée de celui-ci, ou boucle EGR pour « Exhaust Gaz Recirculation ».

La boucle de recirculation 12 prélève des gaz d'échappement d'une conduite d'échappement 14 agencée en sortie du moteur 10 et alimente des moyens 16 d'admission d'un mélange air/gaz d'échappement en entrée du moteur 10.

Cette boucle EGR 12 comprend une vanne EGR 18 pour régler le débit des gaz d'échappement recirculés en entrée du moteur 10, et une première branche de recirculation 20 des gaz d'échappement agencée en amont de la vanne EGR 18, classiquement désignée par le terme « bypass ». Cette branche 20 comprend une vanne 22 proportionnelle, ou en variante une vanne tout-ou-rien, pour moduler le débit des gaz la traversant.

La boucle EGR 12 comprend également une seconde branche 24, en amont de la vanne EGR 18, comportant un échangeur thermique 26 pour refroidir les gaz d'échappement circulant dans celui-ci, par exemple un échangeur air/air ou air/eau, et délivrant les gaz refroidis à l'entrée de la vanne EGR 18.

Les vannes EGR 18 et 22 sont commandables, et plus particulièrement leurs pourcentages d'ouverture, et constituent respectivement des actionneurs propres à régler le débit et la température des gaz recirculés en entrée du moteur 10.

Le moteur 10 est par ailleurs associé à des moyens 28 d'alimentation en carburant des cylindres de celui-ci, comme par exemple des moyens à rampe commune d'alimentation. Le moteur 10 est également associé à une chaîne d'acquisition 30 de paramètres de fonctionnement de celui-ci, comprenant notamment un ou plusieurs capteurs de pression cylindre, implantés ou non dans la culasse, un capteur du régime moteur, un capteur du couple demandé par le conducteur et un capteur d'angle de l'arbre moteur, ces capteurs étant connus en soi dans l'état de la technique.

Le moteur 10 et l'ensemble des organes 18, 22, 26, 28 qui viennent d'être décrits sont commandés par une unité de contrôle 32 connectée à la chaîne d'acquisition 30 et propre à commander la vanne EGR 18 et la vanne 22 du bypass 20 pour régler le débit et la température des gaz d'échappement recirculés en entrée du moteur 10 en fonction des mesures qu'elle reçoit afin de minimiser le bruit de combustion du moteur 10, comme cela sera expliqué plus en détail par la suite.

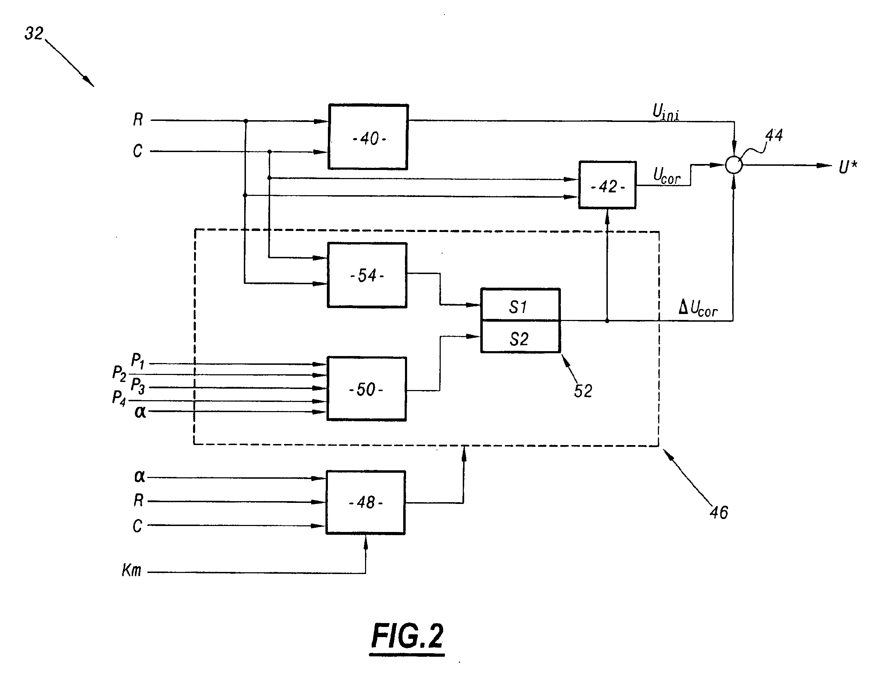

En se référant à la figure 2, qui est une vue schématique de l'unité de contrôle 32, cette dernière comprend des premiers moyens 40 formant cartographie mémorisant des valeurs prédéterminées de signal de pilotage $U_{ini}$ de la boucle EGR 12, ici des pourcentages d'ouverture des vannes 18 et 22, représentatives de débits DEGR et de températures TEGR des gaz recirculés en entrée du moteur 10. Les moyens 40 mémorisent également des valeurs prédéterminées de paramètres de fonctionnement du moteur, notamment son régime R et le couple C qui lui est demandé par le conducteur, chacune associée à une valeur de signal de pilotage mémorisée.

Les moyens 40 formant cartographie, par exemple une table de correspondance ayant pour entrée les valeurs du régime R et du couple C et en sortie les valeurs du signal de pilotage $U_{ini}$, sont connectés à la chaîne d'acquisition 30 pour recevoir les mesures du régime R du moteur et du couple C demandé, et délivrent en réponse aux mesures de régime et de couple reçues, un signal $U_{ini}$ de pilotage de la boucle 12 de recirculation correspondant.

Les valeurs mémorisées dans les moyens 40 sont par exemple déterminées en sortie d'usine lors d'une campagne de test par un jury d'experts afin de minimiser le bruit de combustion d'un moteur Diesel particulier utilisé lors de cette campagne de test, tout en prenant en compte le compromis bruit /émissions.

Du fait de la dispersion des caractéristiques de fonctionnement des moteurs, y compris parmi ceux appartenant à la même famille, et/ou des caractéristiques de vieillissement et d'usure du moteur 10, de la boucle de recirculation 12, et des moyens 28 d'alimentation, les valeurs de signal de pilotage $U_{ini}$ mémorisées dans les moyens 40 sont non optimales pour le moteur 10, parfois dès la sortie d'usine de celui-ci, ou le deviennent au fil du temps.

L'unité de contrôle 32 comprend des seconds moyens 42 formant cartographie de correction, par exemple structurellement analogues aux moyens 40, mémorisant des valeurs de correction $U_{cor}$ des valeurs de signal de pilotage $U_{ini}$ mémorisées dans les premiers moyens 40 formant cartographie en fonction des mêmes valeurs de régime R et de couple C.

Les moyens 42 formant cartographie de correction sont également connectés à la chaîne d'acquisition 30 pour recevoir les mesures du régime R et du couple C demandé et délivrent en réponse la valeur de correction correspondante $U_{cor}$ à un sommateur 44.

Ce sommateur 44 reçoit également la sortie des moyens 40 formant cartographie, réalise la somme U* de celle-ci avec la sortie des moyens 42 formant cartographie de correction, et délivre cette somme U* à la boucle EGR 12 en tant que signal de pilotage de celle-ci afin de régler le débit DEGR et la température TEGR des gaz recirculés en entrée du moteur 10.

Les valeurs de correction $U_{cor}$, initialement nulles à la mise en service du moteur 10, sont déterminées tout au long de la vie du moteur 10 pour corriger les dérives dans le fonctionnement du moteur 10 et des organes qui lui sont associés, responsables de la dégradation du bruit de combustion.

Plus particulièrement, la cartographie de correction des moyens 42 est mise à jour régulièrement et/ou périodiquement par des moyens 46 de correction. Ces moyens 46 sont propres à corriger les valeurs $U_{cor}$ de la cartographie de correction afin que le signal U* de pilotage de la boucle EGR 12 de recirculation soit optimal vis-à-vis du bruit de combustion tout au long du cycle de vie du moteur.

Le déclenchement de la mise à jour des moyens 42 est réalisé par des moyens 48 d'activation/désactivation propres à activer la correction des moyens 42 en fonction de conditions prédéterminées d'activation, et désactiver cette correction lorsque les moyens 42 ont été mis à jour.

Par exemple, les moyens 48 reçoivent le kilométrage km du véhicule de moyens appropriés et sont propres à activer la correction des moyens 42 lorsque le véhicule a parcouru un nombre prédéterminé de kilomètres depuis la dernière correction, et/ou les moyens 48 activent la correction à intervalles de temps réguliers, par exemple tous les X jours, où X est un nombre prédéterminé.

Par ailleurs, les moyens 40 et 42 formant cartographie mémorisant des valeurs de signal de pilotage $U_{ini}$, $U_{cor}$ en fonction de couples (R,C) prédéterminés de régime et de couple, la correction des moyens 42 est réalisée lorsque les mesures du régime R du moteur et du couple C demandé sont égales à l'un des couples (R,C) mémorisé. A cet effet, les moyens 48 sont connectés à la chaîne d'acquisition 30 pour recevoir ces mesures et les comparer aux couples (R,C) mémorisés dans les moyens 40, 42 et activent les moyens 46 de correction si le couple de mesures est égal à l'un de ces couples mémorisés puis stabilisé autour de ce couple, comme cela sera expliqué plus en détail par la suite.

Les moyens 46 de correction comprennent des moyens 50 de calcul connectés à la chaîne d'acquisition 30 pour recevoir les mesures P1, P2, P3, P4 de pression dans les cylindres du moteur 10, par exemple au nombre de 4, et la mesure $\alpha$ de l'angle de l'arbre moteur.

Les moyens 50 sont propres à calculer en fonction de ces mesures un niveau de bruit de combustion dans chaque cylindre, par exemple selon la relation :

$$nbc_i = \max_{\alpha_i \in A} \frac{dP_i}{d\alpha_i}$$

où $nbc_i$ est un niveau de bruit représentatif du bruit généré par la combustion dans le ième cylindre, $P_i$ est la pression mesurée dans le ième cylindre, $\alpha_i$ est l'angle vilebrequin de ce ième cylindre déterminé par les moyens 46 à partir de l'angle moteur $\alpha$, comme cela est connu en soi, et A est une plage prédéterminée d'angles vilebrequin, par exemple une plage de la phase de combustion du cylindre, correspondant à [0 ;90] degrés vilebrequin après le point mort haut du cycle du cylindre.

Les moyens 50 calculent un niveau de bruit de combustion dans le moteur 10 par exemple selon la relation :

$$nbc = \max_{i} nbc_i \quad (1)$$

En variante, le système selon l'invention est propre à calculer le niveau de bruit de combustion dans le moteur en fonction du niveau de bruit de combustion d'un nombre quelconque de cylindres, par exemple un seul cylindre.

Le calcul du gradient de pression $\dfrac{dP_i}{d\alpha_i}$ dans un cylindre est réalisé par exemple en échantillonnant le signal de mesure de la pression $P_i$, délivré par un capteur dont la mesure est analogique, avec un pas d'échantillonnage $\Delta\alpha$ d'angle vilebrequin prédéterminé et en calculant le gradient de pression selon la relation $\dfrac{dP_i}{d\alpha_i}(k) = \dfrac{P_i(k \times \Delta\alpha) - P((k-1) \times \Delta\alpha)}{\Delta\alpha}$ où k est le kième angle d'échantillonnage.

Les moyens 46 de correction comprennent également des moyens 52 d'optimisation mettant en oeuvre une stratégie de recherche prédéterminée de la valeur optimale U* du signal de pilotage de la boucle 12 de recirculation, c'est-à-dire des moyens 52 propres à mettre à jour les valeurs de correction $U_{cor}$ des moyens 42 formant cartographie telles que la somme $U_{ini}+U_{cor}$ est optimale vis-à-vis du bruit de combustion dans le moteur.

Plus particulièrement, ces moyens 52 d'optimisation sont propres à recevoir le niveau de bruit nbc calculé par les moyens 50 ainsi qu'une valeur $\max\left(\dfrac{dP}{d\alpha}\right)_{nom}$ nominale prédéterminée de niveau de bruit de combustion pour le couple (R,C) correspondant. Cette valeur nominale est délivrée par des moyens 54 formant cartographie mémorisant des valeurs de niveau de bruit nominal prédéterminées en fonction des mêmes valeurs de régime et de couple que les moyens 40 et 42 formant cartographie.

Ces moyens 54 sont connectés à la chaîne d'acquisition 30 pour recevoir la mesure du régime R et la mesure du couple C demandé et délivrer en fonction de celles-ci la valeur nominale $\max\left(\dfrac{dP}{d\alpha}\right)_{nom}$ du niveau de bruit correspondante.

Les valeurs nominales de niveau de bruit mémorisées dans les moyens 54 sont par exemple déterminées lors de la campagne de test en fonction de plusieurs critères.

Il est connu que les gradients de pression dans les cylindres d'un moteur Diesel doivent être compris dans des plages de fonctionnement prédéterminées afin que la combustion dans les cylindres se déroule de manière satisfaisante, à la fois tant du point de vue du rendement énergétique que de l'émission de polluants. D'autre part, le bruit de combustion est intimement lié à de tels gradients de pression. Ainsi, les valeurs nominales sont par exemple déterminées pour satisfaire un compromis entre le bruit de combustion perçu par le conducteur du véhicule et les quantités de polluants émises par le moteur 10.

Les moyens 52 d'optimisation sont propres à mettre en oeuvre une stratégie de recherche du signal optimal U* qui, lorsqu'il est appliqué à la boucle 12 de recirculation, a pour effet de rendre sensiblement égal le niveau de bruit nbc calculé par les moyens 50 à la valeur nominale du niveau de bruit $\max\left(\dfrac{dP}{d\alpha}\right)_{nom}$ reçue des moyens 54.

Plus particulièrement, la dégradation du bruit de combustion dans le moteur se traduisant par une augmentation du niveau de bruit selon la relation (1), les moyens 52 sont propres à mettre en oeuvre une stratégie de recherche S1 selon les relations :

$$U^* = \underset{U \in Q, \alpha \in A}{\arg\min} \left(nbc(U)\right) \quad (3)$$

sous la contrainte :

$$\max\left(\frac{dP}{d\alpha}\right)_{nom} - T_{min} \leq nbc(U) \leq \max\left(\frac{dP}{d\alpha}\right)_{nom} + T_{max} \quad (4)$$

où U est le vecteur des paramètres de fonctionnement de la boucle EGR, c'est-à-dire ici les pourcentages d'ouverture des vannes 18 et 22 réglant le débit et la température des gaz recirculés en entrée du moteur 10, Q est un ensemble prédéterminé pour ces paramètres, et $T_{min}$ et $T_{max}$ sont des tolérances prédéterminées positives, par exemple égales à 0,1 bar/ degré vilebrequin.

A cet effet, les moyens 52 d'optimisation sont adaptés pour déterminer et délivrer des valeurs $\Delta U_{cor}$ correctives au sommateur 44 telles que la somme $U_{ini} + U_{cor} + \Delta U_{cor}$ est propre à parcourir l'ensemble Q et à sélectionner une valeur $\Delta U_{cor}$ telle que la somme $U_{ini} + U_{cor} + \Delta U_{cor}$ satisfait la relation (4).

Cette valeur sélectionnée est alors délivrée aux moyens 42 formant cartographie de correction pour la mise à jour de la valeur de correction correspondante en remplaçant la valeur courante $U_{cor}$ par la nouvelle valeur $U_{cor} + \Delta U_{cor}$. Ainsi, pour chaque couple de régime et de couple (R,C) des moyens 42, 44 formant cartographie, le niveau de bruit de combustion est régulé sur la valeur nominale associée à ce couple, le signal $U_{cor} + \Delta U_{cor}$ consistant de ce fait en un signal de régulation du niveau de bruit de combustion sur la valeur nominale.

De manière avantageuse, l'ensemble Q est un ensemble dont les valeurs satisfont à des contraintes prédéterminées sur l'émission de polluants.

Par exemple, on sait qu'un débit EGR trop élevé a pour effet d'augmenter l'émission d'hydrocarbures imbrûlés par le moteur, tels que du HC ou du CH et des particules de suie. Ainsi, les moyens 54 formant cartographie sont par exemple également adaptés pour délivrer aux moyens 52 d'optimisation une plage d'ouverture de vanne EGR 18 et une plage d'ouverture de la vanne 22 de la branche 20 de la boucle EGR 12 en fonction des mesures du régime moteur R et du couple C demandé.

Ces plages sont déterminées par exemple expérimentalement et correspondent à des débits EGR et températures EGR dont les valeurs satisfont aux critères en vigueur sur les émissions de polluants.

Si la résolution du problème d'optimisation décrit ci-dessus échoue, c'est-à-dire si les moyens 52 d'optimisation échouent à trouver une valeur $\Delta U_{cor}$ corrective satisfaisant la relation (4), les moyens 52 sont alors propres à mettre en oeuvre une seconde stratégie S2 de recherche selon la relation :

$$U^* = \underset{U \in Q,\, \alpha \in A}{\arg\min}\left(\left|nbc(U) - \max\left(\frac{dP}{d\alpha}\right)_{nom}\right|\right) \quad (5)$$

sous la contrainte

$$nbc(U) \le \max\left(\frac{dP}{d\alpha}\right)_{nom} \quad (6)$$

L'application de cette seconde stratégie 52 permet de régler le bruit de combustion à un niveau acceptable (grâce à la contrainte (6)) et cela même si la régulation du niveau de bruit selon la première stratégie S1 diverge.

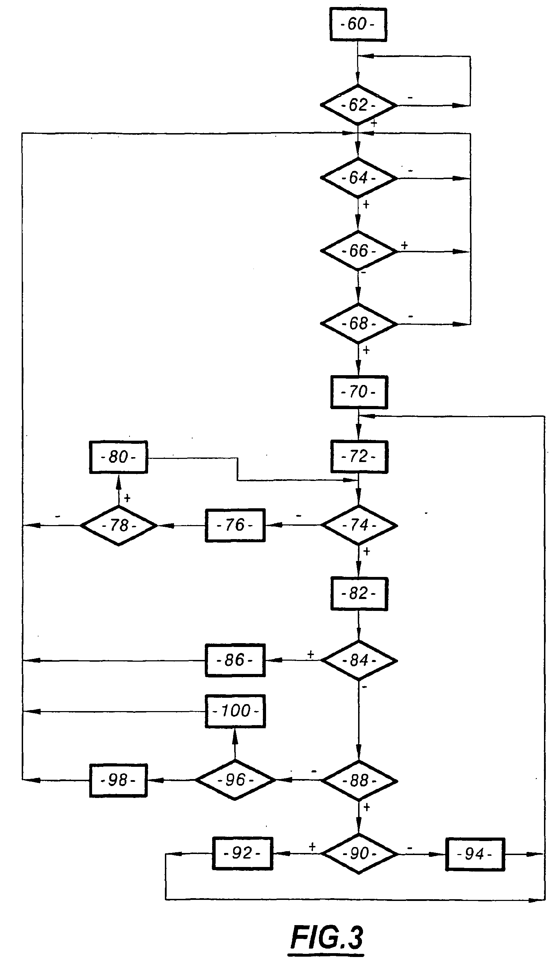

Il va maintenant être décrit en relation avec la figure 3 un mode de réalisation d'un fonctionnement du système de contrôle venant d'être décrit.

Après le démarrage du moteur en 60, une étape 62 de scrutation des conditions de déclenchement de la correction des moyens 42 formant cartographie est mise en oeuvre par les moyens 48 d'activation/désactivation. Si le nombre de kilomètres parcourus par le véhicule depuis la dernière mise à jour des moyens 42 formant cartographie de correction est supérieure à un kilométrage seuil prédéterminé et/ou que la période de temps depuis cette dernière mise à jour est supérieure à une durée seuil prédéterminée, les moyens 48 activent les moyens 46 de correction.

Dans étape 64 suivante, les moyens 48 scrutent si le couple de mesures de régime R et de couple C est égal à un couple de valeurs de régime et de couple des cartographies des moyens 40 et 42.

Si tel est le cas, une étape 66 suivante, par exemple mise en oeuvre par les moyens 48, consiste à tester si la cartographie des moyens 42 a déjà été mise à jour pour ce couple. Si le résultat de ce test est positif, l'étape 66 boucle sur l'étape 64 pour la détection d'un nouveau point de passage. Si toutes les valeurs de la cartographie de correction des moyens 42 ont été mises à jour, la correction des moyens 42 est désactivée et le moteur reprend son fonctionnement normal.

Sinon, l'étape 68 suivante, par exemple mise en oeuvre par les moyens 48, consiste à tester si le point de fonctionnement (R,C) du moteur est stable autour de ce couple des cartographies des moyens 40 et 42, ci-après désigné par « couple de référence ».

A cet effet, un test est mis en oeuvre pour savoir si le couple de mesures (R,C) reste compris dans un pavé centré sur le couple de référence pendant un nombre de cycles moteur prédéterminé $\Delta t$, ou en variante une durée prédéterminée. Si le résultat de ce test est négatif, l'étape 68 boucle alors sur l'étape 64.

Sinon, le couple de référence correspond à un point stable de fonctionnement du moteur pour lequel la mise à jour de la valeur correspondante de la cartographie des moyens 42 formant cartographie de correction est déclenchée dans une étape 70. La valeur corrective $\Delta U_{cor}$ est initialisée à 0 et la valeur nominale du niveau de bruit $\max\left(\dfrac{dP}{d\alpha}\right)_{nom}$

pour le couple de référence est chargée depuis les moyens 54 formant cartographie dans les moyens 52 d'optimisation.

Un compteur de cycles cylindres est alors initialisé en 72 à zéro et un test est mis en oeuvre en 74 pour savoir si la valeur de ce compteur est supérieure à un nombre N prédéterminé de cycles de calcul.

Si le résultat de ce test est négatif, les moyens 50 calculent et mémorisent en 76 un indice du bruit de combustion selon la relation (1).

Dans une étape 78 suivante, les moyens 48 testent si le point de fonctionnement du moteur est toujours stable autour du couple de référence, c'est-à-dire si les mesures du régime R et du couple C demandé sont dans le pavé prédéterminé autour du couple de référence.

Si cela n'est pas le cas, l'étape 78 boucle sur l'étape 64. Sinon, l'étape 78 se poursuit par une étape 80 qui incrémente le compteur de cycle d'une valeur de 1 lorsque le cycle moteur courant est terminé et qui boucle sur l'étape 74.

Si le test sur la valeur du compteur de cycles mis en oeuvre par l'étape 74 est positif, une étape 82 de calcul de la moyenne des niveaux de bruits calculés en 76 est mise en oeuvre par les moyens 50 de calcul et cette moyenne est délivrée aux moyens 52 d'optimisation.

De manière avantageuse, la formation de la moyenne des niveaux de bruit calculés selon la relation (1) permet de rejeter des dispersions dans le fonctionnement des cylindres comme des dispersions coup à coup et permet donc de fiabiliser l'optimisation du bruit de combustion mise en oeuvre par le système selon l'invention.

En variante, le niveau de bruit de combustion n'est pas moyenné, ce qui correspond à N=1.

En variante, afin de minimiser le temps de mise à jour des moyens 42, le fonctionnement du système ne comprend pas les étapes 66 et 78 de test sur la stabilité du point de fonctionnement du moteur, ou en variante la durée $\Delta T$ est réduite et correspond à un nombre réduit de cycles, par exemple égal à 5.

Dans une étape 84 suivante, les moyens 52 d'optimisation testent si le niveau de bruit calculé dans l'étape 82 satisfait à la relation (4).

Si le résultat de ce test est positif, les moyens 52 d'optimisation mettent à jour en 86 les moyens 42 formant cartographie en ajoutant à la valeur de la cartographie de ceux-ci la valeur corrective $\Delta U_{cor}$ courante puis l'étape 86 boucle sur l'étape 64.

Si le résultat de ce test est négatif, une étape 88 est mise en oeuvre par les moyens 52 qui testent si l'évolution du niveau de bruit calculé en 82 est monotone d'un cycle de calcul à l'autre.

Si l'évolution est monotone, c'est-à-dire décroissante, un test est mis en oeuvre en 90 pour savoir si le niveau de bruit calculé en 82 satisfait la relation $\max\left(\dfrac{dP}{d\alpha}\right)_{nom} - T_{min} > nbc$ .

Dans un mode de réalisation préféré de l'invention, la recherche de la valeur corrective $\Delta U_{cor}$ est effectuée sur une connaissance a priori de l'évolution du niveau de bruit de combustion en fonction des variations des pourcentages d'ouverture des vannes 18, 22, c'est-à-dire en fonction des variations du débit DEGR et de la température TEGR des gaz recirculés en entrée du moteur.

On sait qu'augmenter le débit EGR, c'est-à-dire augmenter le pourcentage d'ouverture de la vanne EGR 18, a pour effet de diminuer le bruit de combustion et donc le niveau de bruit de combustion, et vice-versa.

De même on sait qu'augmenter la température EGR, c'est-à-dire augmenter le pourcentage d'ouverture de la vanne 22 du bypass 20, a pour effet d'augmenter le bruit de combustion et donc le niveau de bruit de combustion, et vice-versa.

Si le résultat du test de l'étape 90 est positif, la valeur corrective $\Delta U_{cor}$ est modifiée, et mémorisée dans les moyens 52, dans une étape 92 en diminuant le pourcentage d'ouverture de la vanne EGR 18 d'un premier incrément prédéterminé et en augmentant le pourcentage d'ouverture de la vanne 22 d'un second pas d'incrément prédéterminé.

Si le résultat de ce test est négatif, ce qui signifie que le niveau de bruit de combustion satisfait la relation $nbc > \max\left(\dfrac{dP}{d\alpha}\right)_{nom} + T_{max}$ , la valeur corrective $\Delta U_{cor}$ est modifiée et mémorisée dans les moyens 52, dans une étape 94 en augmentant le pourcentage d'ouverture de la vanne EGR 18 du premier pas d'incrément prédéterminé et en diminuant le pourcentage d'ouverture de la vanne 22 du second pas d'incrément prédéterminé.

Les étapes 92 et 94 bouclent alors sur l'étape 72 pour un nouveau cycle de calcul du niveau de bruit de combustion.

Si le résultat du test sur la monotonie du niveau de bruit mis en oeuvre lors de l'étape 88 est négatif, c'est-à-dire qu'il n'a pas été possible de trouver des réglage des pourcentages d'ouverture de la vanne EGR 18 et de la vanne 22 du bypass 20 satisfaisant la relation (4) pour le couple de référence, un test est mis en oeuvre dans une étape 96 pour savoir s'il existe une valeur corrective $\Delta U_{cor}$ déterminée lors des étapes 92 et 94 qui minimise le niveau de bruit de combustion tout en assurant que la relation $nbc < \max\left(\dfrac{dP}{d\alpha}\right)_{nom} + T_{max}$ est satisfaite, ce qui correspond à la minimisation du bruit de combustion selon la seconde stratégie de recherche.

Si une telle valeur corrective a été déterminée, les moyens 52 d'optimisation mettent à jour en 98 les moyens 42 formant cartographie en ajoutant à la valeur courante des moyens 42 cette valeur corrective $\Delta U_{cor}$ et l'étape 98 boucle sur l'étape 64.

Sinon, un message d'erreur est généré en 100 pour signifier que le bruit de combustion pour le couple de référence considéré n'a pas pu être minimisé de manière satisfaisante et l'étape 100 boucle sur l'étape 64.

Il a été décrit un mode de réalisation particulier de l'invention. D'autres modes de réalisation sont possibles.

En variante, d'autres niveaux de bruit de combustion peuvent être utilisés. Par exemple, si le moteur 10 est un moteur Diesel dont les cylindres sont alimentés selon au moins une injection pilote et une injection principale, le niveau de bruit de combustion peut être calculé selon la relation :

$$nbc = \max_i \left( \beta + \delta \times \max \left( \max_{\alpha_{ip} \in A_{ip}} \frac{dP_i}{d\alpha_{ip}}, \max_{\alpha_{iprn} \in A_{iprn}} \frac{dP_i}{d\alpha_{iprn}} \right) \right) \quad (2)$$

où $\beta$ et $\delta$ sont des paramètres prédéterminés, $\alpha_{ip}$ est un angle vilebrequin de la phase à injection pilote $A_{ip}$ du cycle du ième cylindre et $\alpha_{iprn}$ est un angle vilebrequin de la phase à injection principale $A_{iprn}$ du cycle du ième cylindre.

En variante, seule la vanne EGR 18, c'est-à-dire la vanne de réglage du débit des gaz recirculés en entrée du moteur, est utilisée comme organe de commande du bruit de combustion, et dans ce cas, seule la modification du pourcentage d'ouverture de cette vanne est réalisée lors de la minimisation du niveau de bruit de combustion.

En variante, seule la vanne 22 du bypass 20, c'est-à-dire la vanne de réglage de la température des gaz recirculés en entrée du moteur, est utilisée comme organe de commande du bruit de combustion, et dans ce cas, seule la modification du pourcentage d'ouverture de cette vanne est réalisée lors de la minimisation du niveau de bruit de combustion.

De même, la recherche de la valeur corrective permettant de satisfaire la relation (4) peut être réalisée différemment, par exemple en mettant en oeuvre des algorithmes numériques du type Newton qui approximent le gradient du niveau de bruit de combustion par la relation

$$\left( \frac{nbc(k) - nbc(k-1)}{\%DEGR(k) - \%DEGR(k-1)} \quad \frac{nbc(k) - nbc(k-1)}{\%TEGR(k) - \%TEGR(k-1)} \right)^T, \text{ où } k \text{ est le nombre du cycle cou-}$$

rant de recherche, k-1 le nombre du cycle précédent, %DEGR est le pourcentage d'ouverture de la vanne EGR 18 et %TEGR est le pourcentage d'ouverture de la vanne 22 du bypass 20, une direction initiale de recherche étant par exemple déterminée comme cela a été décrit précédemment en relation avec l'organigramme de la figure 3.

## Revendications

1. Système de contrôle du fonctionnement d'un moteur Diesel (10) de véhicule automobile équipé de moyens (12) de recirculation des gaz d'échappement en entrée de celui-ci, ledit système comprenant des moyens de commande (32) des moyens de recirculation et des moyens (50) de détermination d'un niveau de bruit de combustion dans le moteur (10), les moyens (32) de commande étant adaptés pour piloter les moyens (12) de recirculation en fonction du niveau de bruit de combustion déterminé afin de minimiser le bruit de combustion dans le moteur, ledit système comprenant une chaîne (30) d'acquisition de la pression P dans au moins un cylindre du moteur, de l'angle moteur $\alpha$, et les moyens (50) de détermination du niveau de bruit de combustion déterminant celui-ci en fonction d'un niveau de bruit dans le au moins un cylindre selon la relation :

$$nbc = \max_{\alpha \in A} \left( \frac{dP}{d\alpha} \right)$$

où nbc est le niveau de bruit de combustion et A est une plage prédéterminée d'angles vilebrequin du cycle du au moins un cylindre, lesdits moyens (30) de commande comprenant des moyens (54) formant cartographie de valeurs nominales prédéterminées du niveau de bruit de combustion en fonction de points de fonctionnement prédéterminés du moteur et des moyens (40, 42, 44) de pilotage adaptés pour délivrer aux moyens (12) de recirculation un signal de régulation propre à réguler, pour un point de fonctionnement du moteur de la cartographie, le niveau de bruit de combustion sur la valeur du niveau de bruit de combustion de la cartographie associée à ce point de fonctionnement, **caractérisé en ce que** les moyens (32) de commande comprennent des moyens (46) de correction des moyens (40, 42, 44) de pilotage adaptés pour déterminer le signal de régulation, et corriger les moyens (40, 42, 44) de pilotage en fonction de celui-ci à partir d'une première stratégie selon les relations :

$$U^* = \arg\min_{U \in Q, \alpha \in A} (nbc(U))$$

<u>sous la contrainte :</u>

$$\max\left(\frac{dP}{d\alpha}\right)_{nom} - T_{min} \leq nbc(U) \leq \max\left(\frac{dP}{d\alpha}\right)_{nom} + T_{max}$$

où U' est le signal de régulation, U est un vecteur de paramètres de fonctionnement des moyens de recirculation, Q est un ensemble prédéterminé de valeurs pour les paramètres U, $\max\left(\frac{dP}{d\alpha}\right)_{nom}$ est une valeur nominale du niveau de bruit de combustion, et $T_{min}$ et $T_{max}$ sont des tolérances prédéterminées , positives.

2. Système selon la revendication 1, **caractérisé en ce que** les moyens (12) de recirculation comprennent des moyens (18) de réglage du débit des gaz d'échappement recirculés en entrée du moteur, et **en ce que** les moyens (32) de commande comprennent des moyens (40, 42, 44) de pilotage des moyens de réglage du débit en fonction du niveau de bruit de combustion déterminé.

3. Système selon la revendication 1 ou 2, **caractérisé en ce que** les moyens de recirculation comprennent des moyens de réglage de la température des gaz d'échappement recirculés en entrée du moteur, et **en ce que** les moyens de commande comprennent des moyens (40, 42, 44) de pilotage des moyens de réglage de la température en fonction du niveau de bruit de combustion déterminé.

4. Système selon l'une quelconque des revendications précédentes, **caractérisé en ce que** les moyens (46) de correction sont adaptés, lorsque la première stratégie échoue, pour déterminer le signal de régulation, et corriger les moyens (40, 42, 44) de pilotage en fonction de celui-ci, à partir d'une seconde stratégie selon les relations :

$$U^{*} = \underset{U \in Q, \alpha \in A}{\arg\min}\left(\left|nbc(U) - \max\left(\frac{dP}{d\alpha}\right)_{nom}\right|\right)$$

sous la contrainte :

$$nbc(U) \leq \max\left(\frac{dP}{d\alpha}\right)_{nom}$$

5. Système selon l'une quelconque des revendications précédentes, **caractérisé en ce que** Q est un ensemble prédéterminé de valeurs des paramètres de fonctionnement des moyens de recirculation satisfaisant à des contraintes prédéterminées sur l'émission de polluant par le moteur.

6. Système selon l'une quelconque des revendications précédentes, **caractérisé en ce que** le moteur est du type à homogénéisation partielle ou totale du mélange carburant-gaz admis dans les cylindres du moteur.

**Claims**

1. System for controlling the functioning of a diesel engine (10) of an automobile vehicle equipped with means (12) for recirculation of the exhaust gases at the inlet thereof, the said system comprising control means (32), recirculation means and means (50) for determining a level of combustion noise in the engine (10), the control means (32) being adapted to direct the recirculation means (12) as a function of the level of determined combustion noise so as to minimize the combustion noise in the engine, the said system comprising an acquisition chain (30) of the pressure P in at least one cylinder of the engine, of the engine angle $\alpha$, and the means (50) for determining the level of combustion noise determining the latter as a function of a noise level in the at least one cylinder according to the relation:

$$nbc = \max_{\alpha \in A}\left(\frac{dP}{d\alpha}\right)$$

where nbc is the level of combustion noise and A is a predetermined range of crank angles of the cycle of the at least one cylinder, the said control means (30) comprising means (54) forming a cartography of predetermined nominal values of the level of combustion noise as a function of predetermined functioning points of the engine, and directing means (40, 42, 44) adapted to deliver to the recirculation means (12) a regulating signal suited to regulate, for a functioning point of the engine of the cartography, the combustion noise level over the value of the combustion noise level of the cartography associated with this functioning point, **characterized in that** the control means (32) comprise means (46) for correction of the directing means (40, 42, 44) adapted to determine the regulating signal, and to correct the directing means (40, 42, 44) as a function thereof, from a first strategy according to the relations:

$$U* = \arg\min_{U \in Q, \alpha \in A}\left(nbc(U)\right)$$

under the constraint:

$$\max\left(\frac{dP}{d\alpha}\right)_{nom} - T_{\min} \leq nbc(U) \leq \max\left(\frac{dP}{d\alpha}\right)_{nom} + T_{\max}$$

where U* is the regulating signal, U is a vector of parameters of functioning of the recirculation means, Q is a predetermined set of values for the parameters U, $\max\left(\dfrac{\overline{dP}}{d\alpha}\right)_{nom}$ is a nominal value of the level of combustion noise, and $T_{\min}$ and $T_{\max}$ are predetermined positive tolerances.

2. System according to Claim 1, **characterized in that** the recirculation means (12) comprise regulating means (18) of the flow of the exhaust gases recirculated at the inlet of the engine, and **in that** the control means (32) comprise directing means (40, 42, 44) of the regulating means of the flow as a function of the level of determined combustion noise.

3. System according to Claim 1 or 2, **characterized in that** the recirculation means comprise means for regulating the temperature of the exhaust gases recirculated at the inlet of the engine, and **in that** the control means comprise directing means (40, 42, 44) of the regulating means of the temperature as a function of the level of determined combustion noise.

4. System according to any one of the preceding claims, **characterized in that** the correction means (46) are adapted, when the first strategy fails, to determine the regulating signal and to correct the directing means (40, 42, 44) as a function thereof, from a second strategy according to the relations:

$$U* = \arg\min_{U \in Q, \alpha \in A}\left(\left|nbc(U) - \max\left(\frac{dP}{d\alpha}\right)_{nom}\right|\right)$$

under the constraint:

$$nbc(U) \leq \max\left(\frac{dP}{d\alpha}\right)_{nom}$$

5. System according to any one of the preceding claims, **characterized in that** Q is a predetermined set of values of the parameters of functioning of the recirculation means satisfying predetermined constraints on the emission of pollutant by the engine.

6. System according to any one of the preceding claims, **characterized in that** the engine is of the partial or total homogenisation type of the fuel/gas mixture admitted in the cylinders of the engine.

**Patentansprüche**

1. System zum Prüfen des Funktionierens eines Dieselmotors (10) eines Kraftfahrzeugs, ausgestattet mit Mitteln (12) zum Rezirkulieren der Abgase am Eingang dieses, wobei das System Steuermittel (32) der Rezirkulationsmittel und Mittel (50) zum Bestimmen eines Verbrennungsschallpegels in dem Motor (10) aufweist, wobei die Steuermittel (32) die Rezirkulationsmittel (12) in Abhängigkeit von dem bestimmten Verbrennungsschallpegel steuern können, um das Verbrennungsgeräusch in dem Motor zu minimieren, wobei das System eine Kette zum Erfassen (30) des Drucks P in mindestens einem Zylinder des Motors aufweist, wobei der Motorwinkel α und die Mittel (50) zum Bestimmen des Verbrennungsschallpegels diesen in Abhängigkeit von einem Schallpegel in dem mindestens einen Zylinder gemäß der folgenden Formel bestimmen:

$$nbc = \max_{\alpha \in A}\left(\frac{dP}{d\alpha}\right)$$

wobei nbc der Verbrennungsschallpegel ist und A ein vorbestimmter Bereich von Kurbelwellenwinkeln des Zyklus des mindestens eines Zylinders ist, wobei die Steuermittel (30) Mittel (54) aufweisen, die eine Kartographie vorbestimmter Nennwerte des Verbrennungsschallpegels in Abhängigkeit von vorbestimmten Betriebspunkten des Motors bilden, und Steuermittel (40, 42, 44), die den Rezirkulationsmitteln (12) ein Regelsignal liefern können, das für einen Betriebspunkt des Motors der Kartographie den Verbrennungsschallpegel auf den Wert des Verbrennungsschallpegels der Kartographie, die zu diesem Betriebspunkt gehört, regeln können,
**dadurch gekennzeichnet, dass** die Steuermittel (32) Mittel (46) zum Korrigieren der Steuermittel (40, 42, 44) aufweisen, die das Regelsignal bestimmen können und die Steuermittel (40, 42, 44) in Abhängigkeit von diesem ausgehend von einer ersten Strategie gemäß den folgenden Gleichungen korrigieren können:

$$U^* = \operatorname*{arg\,min}_{U \in Q, \alpha \in A}\left(nbc(U)\right)$$

unter der Auflage:

$$\max\left(\frac{dP}{d\alpha}\right)_{nom} - T_{min} \leq nbc(U) \leq \max\left(\frac{dP}{d\alpha}\right)_{nom} + T_{max}$$

wobei U* das Regelsignal ist, U ein Vektor von Betriebsparametern des Funktionierens der Rezirkulationsmittel, Q eine vorbestimmte Einheit von Werten für die Parameter U ist, $\max\left(\dfrac{dP}{d\alpha}\right)_{nom}$ ein Nennwert des Verbrennung-schallpegels ist und $T_{min}$ und $T_{max}$ vorbestimmte positive Toleranzen sind.

2. System nach Anspruch 1, **dadurch gekennzeichnet, dass** die Rezirkulationsmittel (12) Mittel (18) zum Einstellen des Durchflusses der rezirkulierten Abgase am Eingang des Motors aufweisen, und dass die Steuermittel (32) Steuermittel (40, 42, 44) der Durchflussregelmittel in Abhängigkeit von dem bestimmten Verbrennungsschallpegel aufweisen.

3. System nach Anspruch 1 oder 2, **dadurch gekennzeichnet, dass** die Rezirkulationsmittel Mittel zum Regeln der Temperatur der am Eingang des Motors rezirkulierten Abgase aufweisen, und dass die Steuermittel (40, 42, 44) Mittel zum Regeln der Temperatur in Abhängigkeit von dem bestimmten Verbrennungsschallpegel aufweisen.

4. System nach einem der vorhergehenden Ansprüche, **dadurch gekennzeichnet, dass** die Korrekturmittel (46), wenn die erste Strategie versagt, das Regelsignal bestimmen und die Steuermittel (40, 42, 44) in Abhängigkeit von diesem ausgehend von einer zweiten Strategie gemäß den folgenden Gleichungen korrigieren können:

$$U^* = \arg\min_{U \in Q, \alpha \in A}\left(\left| nbc(U) - \max\left(\frac{dP}{d\alpha}\right)_{nom} \right|\right)$$

unter der Auflage:

$$nbc(U) \le \max\left(\frac{dP}{d\alpha}\right)_{nom}$$

5. System nach einem der vorhergehenden Ansprüche, **dadurch gekennzeichnet, dass** Q eine vorbestimmte Einheit von Betriebsparameterwerten der Rezirkulationsmittel ist, die vorbestimmte Auflagen für das Abgeben von Schadstoffen durch den Motor erfüllen.

6. System nach einem der vorhergehenden Ansprüche, **dadurch gekennzeichnet, dass** der Motor des Typs mit teilweiser oder kompletter Homogenisierung des Gemischs aus Kraftstoff-Gas, das in die Zylinder des Motors eingelassen wird, ist.

**FIG.1**

**FIG.2**

EP 1 693 559 B1

_FIG.3_

**RÉFÉRENCES CITÉES DANS LA DESCRIPTION**

**Documents brevets cités dans la description**

- FR 2835881
- AT 6753 A